(19) Europäisches Patentamt

European Patent Office

Office européen des brevets

(11) EP 0 492 702 B1

(12) **FASCICULE DE BREVET EUROPEEN**

(45) Date de publication et mention
de la délivrance du brevet:
**09.12.1998 Bulletin 1998/50**

(51) Int Cl.$^6$: **G06T 7/20**

(21) Numéro de dépôt: **91203285.1**

(22) Date de dépôt: **13.12.1991**

(54) **Dispositif de correlation**

Korrelationsvorrichtung

Correlation device

(84) Etats contractants désignés:
**DE FR GB**

(30) Priorité: **21.12.1990 FR 9016104**

(43) Date de publication de la demande:
**01.07.1992 Bulletin 1992/27**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB**

(72) Inventeurs:
- **Gobert, Jean**
  **F-75008 Paris (FR)**
- **Sirat, Jacques**
  **F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 368 151**

- **PROCEEDINGS OF THE CONFERENCE ON COMPUTER VISION AND PATTERN RECOGNITION, WASHINGTON, JUIN 83 (US) ;IEEE PRESS , NEW YORK (US) pages 432 - 441; FRANK GLAZER: 'Scene matching by hierarchical correlation'**
- **PARALLEL COMPUTING. vol. 8, no. 1-3, Octobre 1988, AMSTERDAM NL pages 3 - 17; A. KASHKO ET AL.: 'Parallel matching and reconstruction algorithms in computer vision'**
- **NEURAL NETWORKS; PERGAMON PRESS vol. 2, 1989, OXFORD (GB) pages 459 - 473; TERENCE D. SANGER: 'Optimal Unsupervised Learning in a Single-Layer Linear Feedforward Neural'**

## Description

L'invention concerne un dispositif de corrélation opérant sur des signaux d'entrée représentant des symboles organisés en blocs selon une configuration régulière, comprenant :

- un corrélateur qui détermine une corrélation entre des symboles d'un bloc courant et des symboles ayant des positions identiques dans une suite de blocs à traiter issus de ladite configuration,
- et des moyens de sélection qui sélectionnent parmi les symboles dudit bloc courant un nombre limité de symboles de référence sur lesquels porte la corrélation.

La configuration régulière de signaux d'entrée peut être unidimensionnelle ou bidimensionnelle. Il peut s agir par exemple d'une configuration unidimensionnelle où des corrélations peuvent s'opérer sur des blocs de signaux d'entrée d'origine acoustique pour le traitement du son. Un symbole de la configuration est alors une valeur codée sous forme binaire. Préférentiellement il peut s'agir de configurations bidimensionnelles où les corrélations s'opèrent sur des images, par exemple animées, sur lesquelles on détermine des vecteurs de déplacement de la séquence animée entre des images successives. Un symbole de la configuration est alors un pixel. Ces applications sont souvent entreprises en vue d'une réduction du débit des données. On les rencontre par exemple dans le domaine de la télévision (débit élevé) ou dans le domaine du visiophone et de la vidéo-conférence (débit faible).

L'application relative à l'estimation de mouvement d'images animées en télévision présente la particularité de révéler des contraintes très sévères en particulier par la nécessité d'opérer une grande quantité de calculs avec un débit élevé. Cette application sera donc prise ici à titre d'exemple sans que cela puisse limiter l'invention.

Pour l'estimation de mouvement d'images animées, la technique qui semble la plus intéressante est cette dite de la "correspondance bloc à bloc" appelée "block matching" en langue anglaise. Elle consiste à découper l'image en blocs de pixels. Pour un bloc donné de l'image on détermine dans une image antérieure le bloc qui s'en rapproche le plus afin de déterminer le mouvement de la séquence animée représentée dans l'image. C'est cette information de mouvement qui est transmise, pour chaque bloc, à l'organe de réception placé à l'extrémité du canal de transmission.

Le principe du traitement consiste à suivre l'évolution du contenu d'images sur des images successives. Cette technique met à profit le fait que le contenu informationnel varie peu d'une image à l'autre. Le déplacement de l'information contenue dans un bloc se limite généralement à quelques blocs voisins. Ce suivi s'opère en repérant certaines parties qui peuvent être les plus significatives ou qui sont choisies volontairement. Cela peut concerner la totalité des blocs de l'image.

Un bloc courant de référence (expression simplifiée par la suite en "bloc courant") pourra se retrouver situé différemment dans des images soit antérieure soit postérieure. C'est ce déplacement qu'il s'agit de déterminer. Mais ce déplacement reste limité et pour cela on définit une fenêtre à l'intérieur de laquelle ledit bloc courant est susceptible de se trouver.

Le mouvement estimé est la translation entre la position dans l'image du bloc courant et la position dans l'image antérieure/postérieure du bloc antérieur/postérieur qui présente la plus forte corrélation. Ceci permet de déterminer un vecteur de déplacement relatif au bloc courant. La corrélation va donc être déterminée pixel à pixel de même position pour toutes les positions possibles du bloc courant à l'intérieur de la fenêtre correspondante. Les mêmes opérations sont répétées pour les autres blocs courants choisis. La corrélation est généralement évaluée en sommant pour tout le bloc,les valeurs absolues des différences de caractéristiques de pixel à pixel bloc à bloc. La caractéristique du pixel est généralement sa luminance.

Deux obligations principales apparaissent pour une réalisation matérielle d'un estimateur de mouvement : son aptitude à opérer en temps réel, sa complexité matérielle. Différentes stratégies ont été développées, mais certains algorithmes qui sont moins demandeurs en nombre d'opérations s'avèrent moins réguliers et donc plus complexes à mettre en oeuvre. La régularité des phases de calcul est une condition qu'il faut prendre en compte notamment pour la réalisation de circuits intégrés dédiés. Ceci explique que la stratégie habituellement mise en oeuvre consiste en une recherche exhaustive portant sur tous les pixels de tous les blocs de la fenêtre. Des techniques de balayage pour opérer successivement l'analyse de chaque pixel du bloc courant dans la fenêtre peuvent permettre de réduire la complexité matérielle des implémentations.

On a donc cherché à développer des méthodes pour réduire la complexité du traitement d'estimation de mouvement sans nuire à son aptitude à opérer en temps réel. Ainsi on connaît l'article intitulé "Motion-compensated interframe coding for video conferencing" par T. KOGA et al. National Telecommunications Conference 29 Novembre-3 Décembre 1981 NEW ORLEANS LOUISIANE. Ce document détermine un vecteur d'estimation de mouvement en faisant intervenir différentes manipulations notamment un sous-échantillonnage qui permet de ne prendre en compte qu'un nombre limité de pixels par bloc courant c'est-à-dire un pixel sur deux dans une ligne pour un premier cas et qui s'étend même à une ligne sur deux dans un second cas. La complexité hardware s'en trouve diminuée mais au détriment de la précision de l'estimation de mouvement. Le codage différentiel inter-image, qui est une application privilégiée de l'estimation de mouvement, consiste à transmettre une erreur de prédiction, cette dernière étant dans le cas présent le bloc de l'image antérieure choisi dans la fenêtre. Lorsque l'estimation de mouvement est faite correctement l'erreur de prédiction est faible et donc la longueur du code transmis par un canal de transmission est réduite. On conçoit donc que la dégradation de la précision de l'estimation de mouvement a un impact sur l'efficacité du codage. Ainsi dans l'art antérieur cité pour un taux de transmission de 1,5 Mbits/s le taux d'erreurs de prédiction peut s'accroître de 50 %. Ceci nécessite une augmentation de débit pour atteindre une qualité d'image acceptable.

Le problème posé est donc de concevoir un dispositif de corrélation qui permette une réalisation matérielle simplifiée (par rapport à une réalisation habituelle) et qui puisse opérer en temps réel avec un taux d'erreurs de prédiction réduit même pour des applications de traitement d'image de télévision.

Ce but est atteint avec un dispositif de corrélation dont les moyens de sélection sélectionnent, dans ledit bloc courant, un(des) symbole(s) de référence en choisissant sa(leur) position :

- soit en fonction du contenu informationnel dudit bloc courant,
- soit selon une sélection aléatoire,
- soit pour une première partie prioritairement en fonction du contenu informationnel et pour une seconde partie selon une sélection aléatoire.

Il est ainsi possible d'adopter deux stratégies complémentaires qui peuvent être combinées.

Dans le cas d'une image par exemple, avantageusement selon la première stratégie seuls les pixels porteurs d'une information de "distorsion" dans le bloc courant peuvent être choisis pour le calcul de corrélation.

Selon la seconde stratégie, on ignore le contenu informationnel du bloc courant, et les pixels de référence sélectionnés sont répartis aléatoirement dans le bloc courant.

Ces deux stratégies permettent de rompre la régularité de la sélection qui est opérée lorsqu'on élimine un pixel sur deux voire même une ligne sur deux. La régularité de cette sélection présente en effet le désavantage de supprimer la partie haute fréquence du spectre d'information et de provoquer un taux d'erreurs inacceptable à débit élevé (voir le document déjà cité). Par contre selon l'invention la partie haute fréquence du spectre d'information n'est pas supprimée et son importance peut même être contrôlée en intervenant sur le nombre limité de symboles sélectionnés par bloc courant. En combinant la stratégie par le contenu informationnel et la stratégie par sélection aléatoire on conserve cette absence de régularité de la position des symboles dans le bloc courant et on réduit encore le taux d'erreurs en suivant au plus près le contenu de l'information. Dans ce dernier cas les symboles de référence sont sélectionnés prioritairement selon le contenu informationnel et leur nombre est complété par une sélection aléatoire, jusqu'à concurrence du nombre limité prédéterminé.

Lorsqu'un bloc est constitué par des pixels (respectivement des valeurs codées en binaire) la sélection consiste à prendre en référence des pixels (respectivement des valeurs codées en binaire) ayant une certaine position dans le bloc courant.

A ces pixels qui ont une position déterminée dans le bloc courant correspondent d'autres pixels qui ont la même position dans des blocs de la fenêtre à analyser. La corrélation qui est calculée entre deux blocs s'opère en fait entre les pixels des deux blocs qui ont la même position. L'opération est poursuivie pour toutes les positions possibles du bloc courant dans la fenêtre. Le traitement est ensuite poursuivi avec un autre bloc courant associé à une autre fenêtre de recherche. Il est possible que la même sélection aléatoire soit utilisée pour plusieurs blocs courants pour sélectionner la position du(des) symbole(s) de référence sélectionné(s) aléatoirement.

Dans le cas où la sélection s'opère en tenant compte du contenu informationnel du bloc courant, la position des symboles de référence dans le bloc courant est déterminée à partir d'une fonction de distorsion calculée pour chaque symbole du bloc courant vis-à-vis des symboles l'environnant, le(les) symbole(s) de référence sélectionné(s) étant choisi(s) parmi les symboles dont les valeurs de la fonction de distorsion diffèrent le plus de celles relatives aux symboles environnants.

Cette fonction de distorsion peut, par exemple, tenir compte de la variation d'une caractéristique telle que la luminance ou autres entre les pixels voisins d'un même bloc courant. Pour déterminer les pixels les plus représentatifs d'un bloc courant, la fonction de distorsion peut être déterminée en calculant un Laplacien se rapportant à la caractéristique choisie pour le signal d'entrée. Plus généralement on peut prendre en compte des pixels voisins qui entourent un pixel donné de manière isotrope. Mais pour que dans un bloc courant les pixels de référence ne soient pas concentrés dans une partie trop localisée du bloc courant, il est possible d'imposer une contrainte de répartition en subdivisant le bloc courant en plusieurs zones par exemple sous forme d'un quadrillage régulier ou non ou toute autre forme de maillage. Dans ce cas on impose que toutes les zones ou au moins une partie soient représentées par au moins un pixel. Ce pixel par zone peut être choisi avec les mêmes stratégies que celles déjà décrites pour un bloc courant. Ainsi lorsqu'un bloc courant est subdivisé en plusieurs zones, les moyens de sélection opèrent isolément sur chaque zone, la corrélation s'opérant toujours sur la totalité des pixels de référence du bloc courant. Préférentiellement chaque zone d'un bloc courant possède un même nombre de pixels de référence. Lorsque le/les pixel(s) de référence des zones est(sont) sélectionné(s) à partir de la détermination d'une fonction de distorsion, préférentiellement le(s) pixel(s) de référence est (sont) sélectionné(s) dans chaque zone de sorte que les valeurs de la fonction de distorsion qui le(s) caractérisent, soient alternativement maximale et minimale pour des zones contiguës.

Selon l'invention on ne conserve dans un bloc courant qu'un nombre limité de symboles de référence pour opérer le calcul de corrélation. Ce nombre limité peut être choisi de plusieurs manières. Il peut être fixé a priori après des essais préliminaires qui permettent d'établir un calcul de corrélation avec un taux d'erreurs acceptable. Ceci peut être réalisable lorsque le bloc courant contient un nombre réduit de pixels par exemple 4 x 4.

Lorsqu'il s'agit d'une stratégie mettant en oeuvre une fonction de distorsion tenant compte du contenu informationnel, ce nombre limité peut être choisi à partir de bornes imposées aux valeurs que peut présenter cette fonction de distorsion.

Plus généralement lorsque la taille du bloc courant devient grande, il est possible de tenir compte du contenu informationnel de la totalité de l'image et pas seulement de celui du bloc courant pour la détermination du nombre limité de symboles. Pour cela on établit une matrice de corrélation caractéristique de l'ensemble des signaux d'entrée constituant l'image. Par la méthode dite "d'analyse en composantes principales", on calcule les valeurs propres de cette matrice de corrélation et on détermine les variances correspondantes parmi lesquelles on détermine le nombre de variances les plus élevées nécessaires à une bonne représentation de la totalité de l'image. Ce nombre est alors choisi comme nombre limité de symboles de référence.

Selon l'invention, dans ce cas, on fait donc dépendre le nombre limité de symboles de référence du contenu de l'image. Dans un grand nombre de situations ce nombre limité reste principalement lié au type d'images c'est-à-dire à l'application elle-même. Néanmoins il est possible d'asservir plus finement ledit nombre limité au contenu de l'image en le déterminant régulièrement et adaptivement sur des lots d'images. Ceci peut être obtenu à l'aide d'un dispositif de corrélation qui comprend un réseau de neurones qui met en oeuvre la méthode dite "d'analyse en composantes principales" et qui sélectionne le nombre des variances les plus élevées. Cycliquement ce nombre de variances est introduit dans les moyens de sélection pour constituer ledit nombre limité afin d'opérer comme cela a déjà été décrit.

Un réseau de neurones est un dispositif connu de traitement de signaux qui peut, après une étape de programmation ou une étape d'apprentissage, effectuer des traitements déterminés par exemple une "analyse en composantes principales" de la distribution de signaux d'entrée. Un tel réseau de neurones peut par exemple être celui décrit dans le document : "Optimal unsupervised Learning in single-layer linear Feedforward Neural networks" T.D. SANGER Neural Networks, vol.2, 1989, p.459-473.

Comme cela a été indiqué précédemment, le fait de ne faire porter le calcul de corrélation que sur certains symboles de référence ayant une certaine position dans le bloc courant permet de simplifier la réalisation matérielle, d'accroître la vitesse de traitement tout en conservant le taux d'erreurs à des valeurs faibles et contrôlables.

De plus, les mécanismes de sélection des symboles de référence permettent d'apporter dans certaines situations une simplification supplémentaire de la complexité de la réalisation matérielle. En particulier lorsque le bloc courant est subdivisé en zones ceci permet avantageusement d'obtenir soit un gain de vitesse de traitement soit un gain de complexité du hardware. Cette situation apparaît lorsque le dispositif de corrélation opère un calcul de corrélation avec des blocs courants de données subdivisés en p zones avec n/p symboles de référence sélectionnés par zone, le corrélateur comprenant :

- un réseau systolique de registres qui se transfèrent l'un à l'autre des données des pixels de la fenêtre,
- une pluralité de processeurs, chaque processeur réalisant un calcul de la corrélation d'au moins un vecteur de déplacement,

le dispositif mettant en oeuvre une première étape de calcul au cours de laquelle :

a) chaque processeur opère un calcul de corrélation successivement sur les n/p symboles de référence sélectionnés d'une première zone, ledit calcul portant successivement sur tous les vecteurs de déplacement que doit calculer ledit processeur,
b) des moyens de mémorisation stockent des résultats intermédiaires délivrés par les processeurs à l'issue de a),
c) des moyens de transfert transfèrent le contenu des registres opérant sur une zone vers des registres suivants opérant sur une zone suivante,

ladite première étape de calcul étant ensuite réitérée pour les p-1 zones suivantes, des moyens de sommation déterminant la somme des résultats intermédiaires relatifs à chaque bloc à traiter pour délivrer les corrélations de ladite suite de blocs.

Un cas particulièrement intéressant se présente pour le traitement d'images, lorsque lesdites zones renferment plusieurs pixels dont un seul est sélectionné pour opérer le calcul de corrélation. Il est alors possible d'obtenir un gain supplémentaire et de choisir, pour le corrélateur, entre une architecture qui privilégie la vitesse ou une architecture qui privilégie la simplicité du hardware c'est-à-dire qui réduit la surface pour une réalisation intégrée.

Dans le cas de l'architecture privilégiant la vitesse, le corrélateur comprend sensiblement autant de processeurs qu'il y a de déplacements possibles dans la fenêtre et il opère sur un nombre réduit de pixels de référence ce qui accroît sa vitesse d'exécution par rapport à une utilisation de la totalité des pixels du bloc courant. Un cas particulièrement intéressant est celui où chaque zone ne contient que 4 pixels, avec un seul pixel de référence sélectionné par zone. Dans ce cas le corrélateur opère sur une fenêtre bidimensionnelle de pixels avec des blocs courants subdivisés en zones contenant 4 pixels chacune avec un seul pixel de référence sélectionné par zone, une matrice bidimensionnelle de registres stockant, à un instant donné, les pixels de ladite fenêtre selon le même ordonnancement, quatre registres étant affectés au traitement d'une zone, des rangées desdits registres se communiquant entre eux, dans les deux directions de la matrice, des pixels d'ordre pair de la fenêtre et d'autres rangées de registres se communiquant entre eux des pixels d'ordre impair de la fenêtre, cette communication étant unidirectionnelle selon une direction de la fenêtre et étant bidirectionnelle selon l'autre direction de la fenêtre, un processeur étant affecté au traitement de chaque vecteur de déplacement et opérant avec quatre registres contenant des pixels pairs et impairs de la fenêtre, les numéros d'ordre desdits pixels pris deux à deux étant consécutifs dans chaque direction, un signal de sélection commun faisant opérer les processeurs avec les données des registres correspondant aux pixels de référence sélectionnés dans le bloc courant.

Dans le cas de l'architecture privilégiant la réduction de la complexité du hardware, un cas particulièrement intéressant est celui où le corrélateur opère sur une fenêtre bidimensionnelle de pixels avec des blocs courants subdivisés en zones rectangulaires contenant k pixels avec un seul pixel de référence sélectionné par zone, une matrice bidimensionnelle de registres stockant, à un instant donné, les pixels de ladite fenêtre selon le même ordonnancement, k registres étant affectés au traitement d'une zone, des rangées desdits registres se communiquant entre eux bidirectionnellement des pixels de la fenêtre dans les deux directions de la matrice, un processeur étant affecté au traitement successif de k vecteurs de déplacement en opérant avec k registres contenant des pixels appartenant à la même zone, les numéros d'ordre desdits pixels étant consécutifs dans les deux directions, un signal de sélection faisant opérer chaque processeur, pour chaque déplacement, avec les données du registre correspondant au pixel de référence sélectionné de la zone courante.

L'invention ne se limite pas au cas de configurations bidimensionnelles de symboles. Elle s'applique également au cas de configurations unidimensionnelles. Les symboles peuvent ainsi être des valeurs codées binaires représentant une configuration unidimensionnelle de signaux acoustiques. Le dispositif de corrélation opère alors sur des blocs courants renfermant plusieurs desdites valeurs parmi lesquelles sont sélectionnées, en nombre limité, et en position, des valeurs de référence.

L'invention sera mieux comprise à l'aide des figures suivantes données à titre d'exemples non limitatifs qui représentent :

figures 1A, 1B : une représentation d'une image dans laquelle se trouve une fenêtre renfermant des blocs à traiter sur lesquels doit porter la corrélation et celle d'un bloc courant dans une image postérieure,
figure 2 : un schéma-bloc d'un dispositif de corrélation,
figures 3A, 3B : une représentation d'un bloc courant de 8 x 8 pixels indiquant les positions des symboles de référence sélectionnés selon l'art antérieur,
figures 3C, 3D, 3E, 3F : à titre d'exemple, une représentation d'un bloc courant de 8x8 pixels indiquant les positions des symboles de référence sélectionnés selon l'invention,
figures 4A, 4B, 4C, 4D : une représentation des pixels environnant un pixel donné pour le calcul de la fonction de distorsion,
figure 5 : un schéma d'une partie des moyens de sélection permettant de calculer une fonction de distorsion selon la représentation de la figure 4A,
figure 6 : un schéma détaillé d'une unité de sélection comprenant un organe de calcul d'un Laplacien et un organe de tri,
figure 7 : un schéma-bloc d'un dispositif de corrélation comprenant un réseau de neurones pour déterminer le nombre de symboles de référence,
figure 8 : un schéma d'un corrélateur selon l'art antérieur,
figures 9A, 9B : une représentation de blocs à traiter d'une fenêtre et d'un bloc courant subdivisé en zones,
figure 10 : un schéma d'un processeur entouré des organes de base nécessaires à son fonctionnement,
figure 11 : un schéma d'un corrélateur privilégiant la simplicité du hardware opérant sur des blocs courants subdivisés en zones de 4 symboles parmi lesquels est choisi un symbole de référence.
figure 12 : un schéma d'un corrélateur privilégiant la vitesse opérant sur des blocs courants subdivisés en zones de 4 symboles.

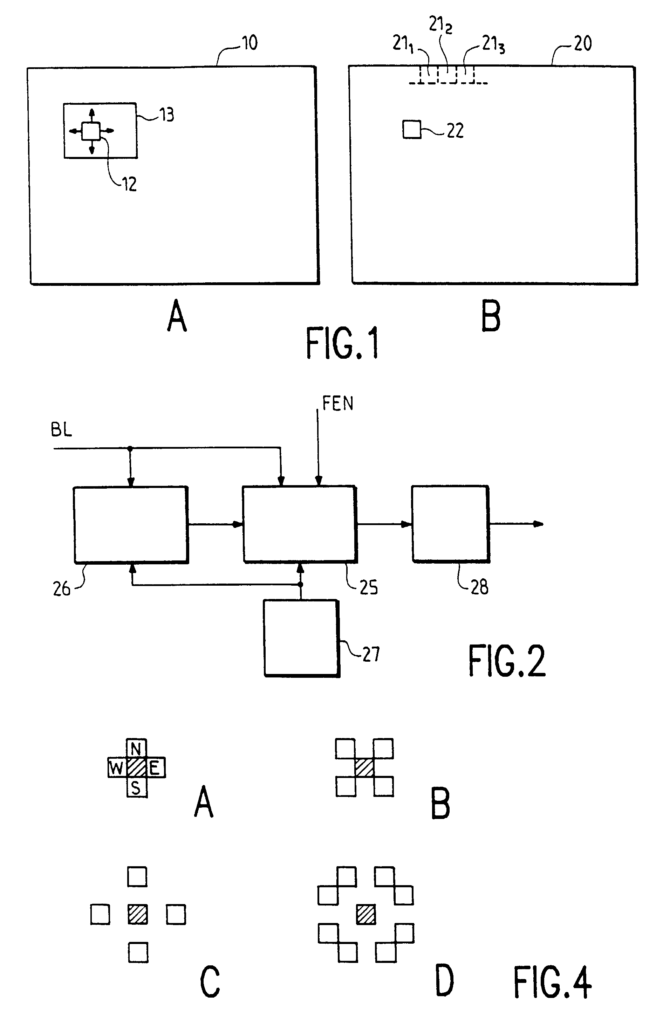

La figure 1A représente une image 10 et la figure 1B représente une image 20 qui peut être antérieure mais

EP 0 492 702 B1

préférentiellement postérieure à l'image 10 sur lesquelles est effectué le calcul de corrélation.

L'image 20 est formée de pixels que l'on analyse sous forme de blocs courants, par exemple les blocs $21_1$, $21_2$, $21_3$. Dans l'image 20, pour un bloc courant quelconque par exemple le bloc courant 22, le traitement va consister à déterminer à quel bloc de l'image précédente 10 il est corrélé. Pour cela autour d'un bloc 12 qui a, dans l'image 10, les mêmes coordonnées que celles du bloc courant 22 dans l'image 20, on détermine une fenêtre 13 qui entoure le bloc 12 afin de limiter le nombre et la position des blocs sur lesquels doit porter la recherche comme étant la plus probable à contenir le bloc corrélé. La taille et la forme de cette fenêtre dépend de l'étendue de la recherche que l'on désire opérer et donc en définitive du temps de traitement qu'il est possible de consacrer à l'examen d'une fenêtre et aussi de la complexité que l'on admet pour la réalisation matérielle qui en découle. Ainsi le bloc courant 22 (image 20) est comparé à tous les blocs de la fenêtre 13 de l'image 10 obtenus en déplaçant le bloc par pas successifs d'au moins 1 pixel.

A l'issu de ce traitement un autre bloc courant est choisi dans l'image 20 auquel va correspondre une autre fenêtre dans l'image 10 et le même traitement est effectué, et ainsi de suite. Les blocs courants choisis dans l'image 20 peuvent l'être en nombre limité mais préférentiellement tous les blocs subissent le même traitement. En fonction de la position du bloc courant dans l'image 20 et de celle du bloc corrélé dans l'image 10 on en déduit à chaque fois un vecteur de déplacement du bloc courant. C'est ce vecteur de déplacement ainsi que l'écart de caractéristique du pixel (par exemple de luminance) qui est codé et transmis par le canal de transmission afin d'opérer une compression de données.

Le dispositif de corrélation qui met en oeuvre le traitement est représenté sur la figure 2. Il comprend un corrélateur 25, une unité de sélection 26 qui détermine sur quels pixels du bloc courant 22 doit porter la corrélation, une unité de balayage 27 qui détermine l'ordre selon lequel lespixels du bloc 12 et par extension de la fenêtre doivent être analysés. A la sortie du corrélateur 25 une unité de décision 28 détermine le bloc de la fenêtre 13 pour lequel la tion est maximale. Le bloc courant BL à traiter est introduit dans l'unité de sélection 26 et dans le corrélateur 25. Ce dernier reçoit également l'étendue de la fenêtre FEN qui peut être asservie à la vitesse d'exécution nécessaire à l'application.

La corrélation consiste à comparer successivement deux blocs entre eux en comparant les pixels ayant dans chaque bloc des positions respectives identiques. Il est courant d'effectuer un traitement exhaustif portant sur la totalité des pixels des blocs. Mais selon le document déjà cité il est possible de réduire l'importance du traitement en ne considérant qu'un nombre limité de pixels par bloc courant.

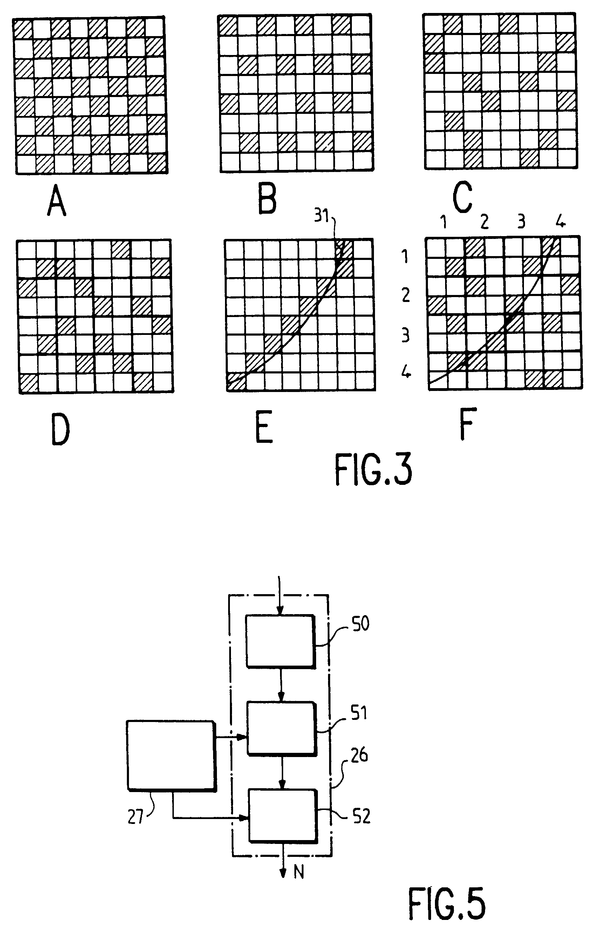

Les figures 3A et 3B représentent deux possibilités mises en oeuvre dans le document cité. Elles représentent un bloc courant de 8 x 8 = 64 pixels sur lesquelles on a hachuré les pixels de référence qui sont sélectionnés pour opérer la corrélation. Sur la figure 3A on sélectionne un pixel sur deux, ce qui divise le traitement par 2. Sur la figure 3B on ignore en plus une ligne complète de pixels sur deux ce qui divise encore le traitement par 2. Ces limitations du nombre de pixels de référence peuvent s'opérer aisément par exemple en intervenant sur les durées des horloges de balayages. Mais la grande régularité qui découle de ces modes de limitation a pour conséquence que la partie haute fréquence du spectre d'un bloc d'information est tronquée et qu'un taux d'erreurs important apparaît.

Pour remédier à ce défaut selon l'invention on n'opère pas systématiquement une sélection régulière des pixels de référence à l'intérieur d'un bloc courant.

Une première stratégie représentée sur la figure 3C à titre d'exemple consiste en une sélection aléatoire à concurrence d'un nombre limité prédéterminé de pixels de référence. Ainsi sur la figure 3C on a hachuré 16 pixels de référence sélectionnés aléatoirement dans le bloc courant.

Une seconde stratégie représentée sur la figure 3E à titre d'exemple prend en compte le contenu informationnel que renferme le bloc courant. Ainsi supposons qu'une courbe fictive 31 délimite dans le bloc courant deux parties de luminances différentes. Selon l'invention, les pixels de référence sélectionnés pour opérer la corrélation vont être déterminés en tenant compte du contenu informationnel en déterminant une fonction de distorsion. Brièvement on peut indiquer que la sélection va s'opérer dans les parties où la caractéristique (ici la luminance) subit les variations par rapport à ses proches voisins. Tous les pixels du bloc courant sont ainsi examinés. L'unité de sélection 26 (figure 2) opère cette détermination. Les figures 4A, 4B, 4C, 4D indiquent quelques modes possibles d'examen du contenu informationnel avec des répartitions isotropes.

La figure 4A représente un mode préférentiel qui consiste pour un pixel donné (hachuré) à comparer sa variation de luminance avec ses voisins ayant des coordonnées distantes individuellement de ±1. Ceci revient à calculer un Laplacien $\Delta$ tel que :

$$\Delta = 4I(x,y)-(I(x+1,y)+I(x,y+1)+I(x-1),y)+I(x,y-1))$$

Pour la figure 4B la fonction de distorsion est :

$$\Gamma = 4I(x,y)-(I(x+1,y+1)+I(x+1,y-1)+I(x-1,y+1)+I(x-1,y-1))$$

6

Pour la figure 4C la fonction de distorsion est :

$$\Lambda = 4I(x,y)-(I(x+2,y)+I(x-2,y)+I(x,y+2)+I(x,y-2))$$

Pour la figure 4E la fonction de distorsion est :

$$\Psi = 8I(x,y)-(I(x+1,y+2)+I(x+1,y-2)+I(x-1,y+2)+I(x-1,y-2)$$

$$+I(x+2,y+1)+I(x-2,y+1)+I(x+2,y-1)+I(x-2,y-1)).$$

D'autres répartitions des pixels environnants sont possibles même si elles ne sont pas isotropes.

Lorsque la fonction de distorsion a été ainsi calculée pour tous les pixels du bloc courant, l'unité de sélection détermine les pixels ayant les valeurs extrêmales afin de les sélectionner pour représenter ledit bloc courant.

Selon les deux stratégies qui viennent d'être décrites il apparaît que certaines parties d'un bloc courant peuvent ne pas être représentées ou ne sont pas représentées. Pour limiter l'erreur sur la corrélation qui risque d'en résulter il peut être souhaitable que lesdites parties soient au moins partiellement représentées. Pour cela plus particulièrement selon l'invention on subdivise le bloc courant en zones qui peuvent être régulières ou non. Préférentiellement on subdivise le bloc courant en zones identiques possédant un même nombre de pixels. On fait alors porter la sélection aléatoire non plus au niveau du bloc courant mais au niveau de la zone. Ainsi les pixels de référence sont sélectionnés aléatoirement par zone. Ceci est représenté sur la figure 3D où 16 pixels de référence sélectionnés aléatoirement sont représentés par des hachures. Une même sélection aléatoire de ce type peut être utilisée pour plusieurs blocs courants pour opérer le calcul de corrélation. Bien que la sélection aléatoire s'opère au niveau de la zone, le calcul de corrélation reste effectué au niveau du bloc courant.

La figure 3F représente la situation où les deux stratégies peuvent être combinées. Pour cela une première partie des pixels de référence est sélectionnée prioritairement en fonction du contenu informationnel et une seconde partie est sélectionnée à partir d'une sélection aléatoire par zone. Cette seconde partie est limitée jusqu'à concurrence que la totalité des pixels de référence sélectionnés atteigne le nombre limité prévu.

Le schéma de la figure 5 représente une unité de sélection 26 déterminant la position des points dans un bloc courant à partir du calcul d'une fonction de distorsion (fonctions $\Delta$, $\Gamma$, $\Lambda$ ou $\Psi$ précédentes) opéré dans un organe de calcul 50. Les résultats obtenus sont triés dans un organe de tri 51 selon un algorithme de tri afin de limiter le nombre de symboles de référence par bloc courant. Les adresses des symboles de référence retenus sont stockées dans un registre d'adresses 52 pour être exploitées par le corrélateur. L'unité de sélection 26 opère sous le contrôle de l'unité de balayage 27.

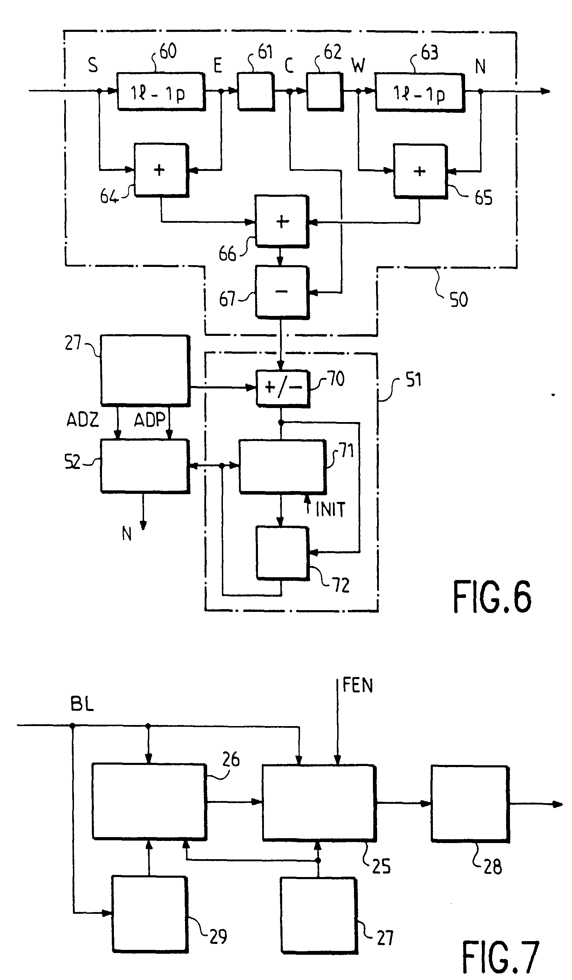

Un schéma détaillé de l'organe de calcul 50 et de l'organe de tri 51 est représenté sur la figure 6 dans le cas où la fonction de distorsion est le laplacien $\Delta$ défini précédemment. Cette fonction de distorsion correspond à la représentation de la figure 4A où les lettres N, S, E, W représentent respectivement les points cardinaux Nord, Sud, Est, Ouest. Ces lettres sont reportées sur le schéma de la figure 6, la lettre C représentant le pixel central. La situation concerne le cas où le balayage s'applique à tous les pixels du bloc courant selon un balayage ligne après ligne. Sur la figure 6 est représentée une chaîne de retards constituée :

- d'une première ligne à retard 60 et d'une seconde ligne à retard 63 qui retardent chacune les données de la durée d'une ligne moins celle d'un pixel,
- d'un premier registre 61 et d'un second registre 62 qui retardent chacun les données de la durée de balayage d'un pixel.

Ainsi après trois lignes de balayage, les données des pixels N, S, E, W se trouvent réparties comme cela est indiqué sur la figure 6 :

la donnée N est à la sortie de la ligne à retard 63 et
la donnée S est à l'entrée de la ligne à retard 60.

Un additionneur 64 et un additionneur 65 opèrent respectivement les additions S+E et W+N. Les deux résultats sont additionnés dans un additionneur 66. Ce dernier résultat doit être retranché de 4 fois la valeur de la donnée centrale C. Celle-ci se présente en C entre les deux registres 61 et 62. Pour la multiplier par 4 il suffit de la décaler de 2 bits à l'entrée du soustracteur 67 qui reçoit la sortie de l'additionneur 66. La sortie du soustracteur 67 délivre la fonction de distorsion $\Delta$ qui est calculée pour tous les pixels de chaque bloc courant. Parmi tous ces pixels on en sélectionne un nombre limité pour constituer les pixels de référence à l'aide de l'organe de tri 51. Selon un mode préférentiel on trie dans l'ensemble de tous les pixels d'un bloc courant les pixels pour lesquels la fonction de distorsion Δ est soit maximale soit minimale et on applique ce tri au cas du découpage en zones en faisant que deux zones contiguës possèdent des fonctions Δ alternées positives et négatives.

Pour cela l'organe de tri 51 comprend :

- un sélecteur de signe 70 qui est contrôlé par l'unité de balayage 27,
- une batterie de registres 71 stockant des valeurs maximum/minimum pour chaque zone,
- un comparateur 72 qui détermine pour chaque zone la valeur à conserver soit maximale soit minimale selon le signe requis.

Les adresses des pixels de référence sélectionnés sont stockées dans le registre d'adresses 52 qui reçoit les adresses de pixels ADP et les adresses de zones ADZ de l'unité de balayage 27.

L'unité de balayage 27 donne la cadence de signes alternés + et - attribués à chaque zone. Lorsque le signe positif est affecté à une zone, le résultat issu de l'organe de calcul 50 est pris avec son signe, puis comparé à la valeur précédente stockée pour la même zone dans la batterie de registres 71. Si la dernière valeur est la plus élevée elle remplace l'ancienne valeur dans la batterie de registres 71. Simultanément l'adresse du pixel correspondant ADP est stockée dans le registre d'adresses 52.

Lorsque le signe négatif est affecté à une autre zone, le résultat issu de l'organe de calcul 50 est pris en inversant son signe. Il est comparé à la valeur précédente stockée pour la même autre zone dans la batterie de registres 71. Du fait de l'inversion de signe, le même comparateur opère de la même manière dans l'un et l'autre cas en déterminant un maximum.

A la fin du balayage, le registre d'adresses 52 contient le résultat du tri c'est-à-dire, pour chaque zone, l'adresse du pixel sélectionné, ayant la distorsion maximale ou minimale de la zone.

Le schéma de la figure 6 correspond au calcul de la fonction de distorsion relative à la figure 4A. En appliquant la même méthode, l'homme du métier peut sans difficulté établir le schéma de l'unité de calcul opérant le calcul des exemples de fonctions de distorsion des figures 4B, 4C et 4D.

Pour réaliser une implémentation compacte et régulière selon cet aspect de l'invention il est intéressant que le dispositif de corrélation opère sur des blocs de N x N pixels, avec N = 16, parmi lesquels sont sélectionnés n pixels de référence, avec n = 8.

Jusqu'à maintenant le nombre de symboles de référence dans un bloc courant était limité et prédéterminé à l'avance, la sélection s'opérant sur la position des pixels sélectionnés dans le bloc courant. Le nombre lui-même peut être déterminé de plusieurs manières. Lorsque le nombre de pixels par bloc courant est peu élevé il est possible d'effectuer des essais préliminaires en fonction du type d'images (donc de la configuration) à traiter. On réduit à chaque essai le nombre de pixels de référence sélectionnés, on calcule une fonction d'erreurs entre l'image de départ et l'image restituée et on détermine ce nombre selon le niveau d'erreurs acceptable. Un même nombre peut s'appliquer à plusieurs types d'images.

Lorsque le nombre de pixels de référence par bloc courant s'accroît la méthode par essais préliminaires peut devenir fastidieuse. Il est alors préférable d'analyser les images à partir de caractéristiques qui soient représentatives de la distribution des pixels. Dans ce cas l'invention préconise d'utiliser la technique dite "d'analyse en composantes principales" de ladite distribution (prise ici dans le sens mathématique du terme). On calcule les valeurs propres de la matrice de corrélation relative à cette distribution et les variances correspondantes parmi lesquelles on détermine le nombre des variances les plus élevées suffisantes pour représenter correctement l'image. C'est ce nombre de variances qui est choisi comme nombre limité de pixels de référence. Ce calcul peut être fait préalablement pour des images-type puis exploité dans le dispositif de corrélation. Mais il est également possible de l'effectuer adaptativement sur les images fournies au dispositif de corrélation. Ainsi dynamiquement le nombre limité de pixels de référence peut être adapté aux images à traiter afin d'opérer un traitement plus précis. Ce calcul est opéré à une cadence qui dépend des images à traiter par un réseau de neurones qui met en oeuvre la technique "d'analyse en composantes principales". Ceci est représenté sur le schéma de la figure 7 qui présente les mêmes éléments que la figure 2 avec en plus un réseau de neurones 29 qui reçoit les blocs d'images à traiter et qui fournit à l'unité de sélection 26 le nombre limité de pixels de référence à sélectionner.

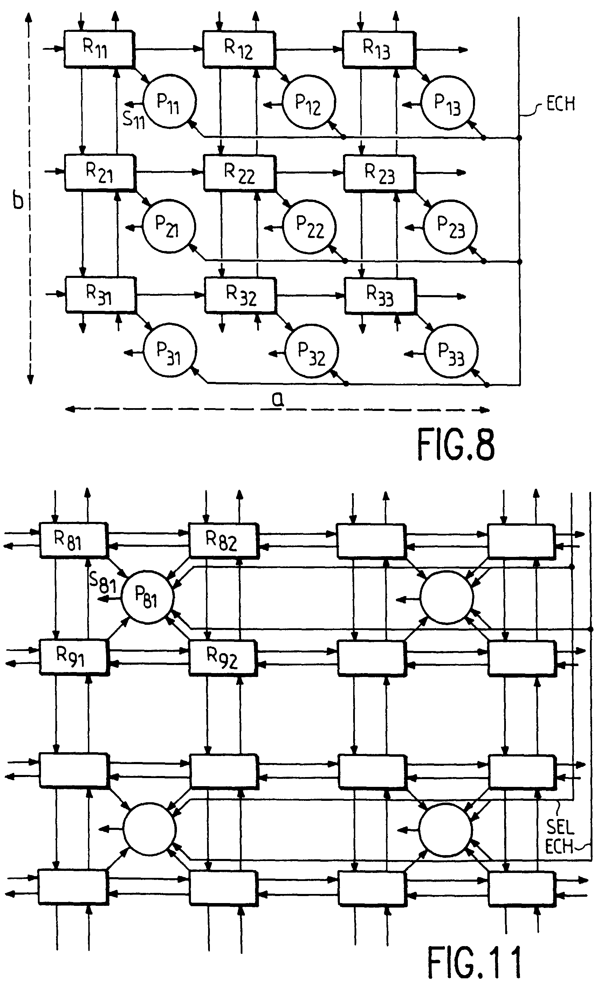

La figure 8 représente le schéma d'une structure classique d'un corrélateur. Il consiste en des réseaux systoliques de a.b cellules où a et b sont les dimensions de la fenêtre de recherche. Chaque cellule contient un registre R qui mémorise la valeur d'un échantillon et un processeur élémentaire P, relié au registre R, qui calcule la fonction de corrélation. Le corrélateur comprend autant de cellules que la fenêtre renferme de pixels à analyser. Chaque cellule possède une position déterminée en rapport avec la fenêtre, donc un vecteur de déplacement qui lui est propre.

La figure 8 représente un corrélateur à 9 cellules. Un premier rang contient les cellules $R_{11}/P_{11}$ à $R_{13}/P_{13}$, un second rang contient les cellules $R_{21}/P_{21}$ à $R_{23}/P_{23}$, un troisième rang contient les cellules $R_{31}/P_{31}$ à $R_{33}/P_{33}$. Chaque

registre est relié à ses quatre plus proches voisins par 3 liaisons réceptrices et 3 liaisons émettrices. Ainsi par exemple le registre R22 reçoit des données des registres $R_{12}$, $R_{21}$, $R_{32}$. Le même registre $R_{22}$ délivre des données aux registres $R_{12}$, $R_{23}$, $R_{32}$. Chaque registre contient successivement les données concernant tous les pixels d'un bloc à analyser. Le processeur affecté audit registre calcule à chaque fois la fonction de corrélation entre cette donnée et la valeur ECH de l'échantillon courant qui est distribuée sur tous les processeurs. Si c et d sont les dimensions du bloc à analyser, il faut c.d cycles à chaque processeur pour cumuler le total de la fonction de distorsion relative à un bloc à analyser. A chaque cycle on diffuse à l'ensemble des processeurs la valeur de l'échantillon du bloc courant et l'on décale d'un pas l'ensemble des contenus des registres R de sorte que pour tout processeur il y ait toujours le même déplacement D entre la donnée du registre R et la donnée diffusée. Des organes annexes (non représentés) permettent de déterminer le processeur délivrant la meilleure corrélation et d'en déduire le vecteur de déplacement par la position de ce meilleur processeur dans le réseau. Il faut donc a.b cellules opérant sur c.d cycles.

Dans la structure de la figure 8 un processeur est affecté à un registre pour traiter la totalité des pixels d'un bloc courant. Selon l'invention ce nombre de pixels à traiter est limité d'où des aménagements sont possibles pour obtenir un gain soit sur la vitesse pour une taille de hardware sensiblement analogue, soit sur la taille du hardware pour une vitesse sensiblement constante.

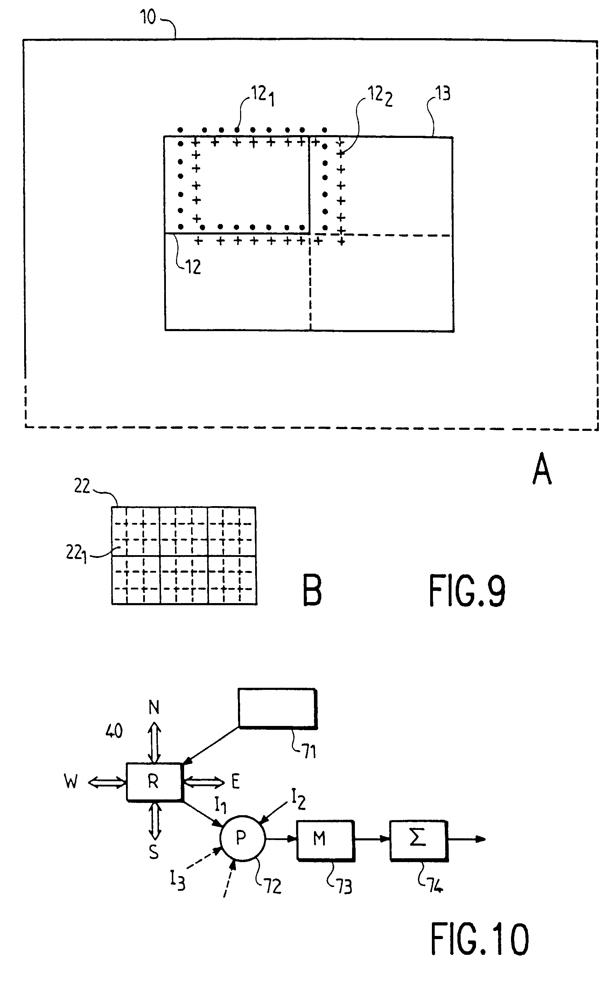

Des avantages substantiels sont obtenus lorsque le bloc courant est subdivisé en zones. Les figures 9A, 9B représentent schématiquement le traitement qui est opéré. La figure 9B représente un bloc courant 22 qui est subdivisé en 6 zones, par exemple la zone $22_1$, elles-mêmes formées de pixels. Une zone renferme 9 pixels dans cet exemple parmi lesquels sont sélectionnés les pixels de référence.

Par ailleurs dans une image 10, est représentée une fenêtre à traiter 13. Le traitement de la totalité de l'image consiste à effectuer des traitements successifs sur une suite de telles fenêtres. Comme cela a été décrit préalahlement le calcul de corrélation consiste à corréler pixel à pixel le bloc courant 22 avec chaque bloc à traiter constituant la fenêtre par exemple le bloc 12. Tous les blocs à traiter compris dans la fenêtre sont obtenus par glissement d'un pas de 1 pixel successivement dans les deux directions. Le bloc 12 glisse d'un pixel successivement selon le bloc $12_1$ (points) puis selon le bloc $12_2$ (croix). Ils sont légèrement décalés verticalement pour pouvoir les représenter. Dans le cas où le bloc courant 22 est subdivisé en zones, le calcul de corrélation avec les blocs à traiter s'opère à deux niveaux.

On considère d'abord les pixels de référence d'une zone déterminée par exemple ceux de la zone $22_1$ du bloc courant (en haut à gauche).

On calcule la corrélation pour les pixels de chaque bloc à traiter (dans une fenêtre) ayant la même position relative dans le bloc, c'est-à-dire pour la même zone en haut à gauche dans le bloc. On obtient ainsi des résultats intermédiaires concernant une zone particulière pour tous les blocs. Le calcul porte ensuite sur la zone suivante selon le même processus.

Le traitement est schématisé de la façon suivante :

- première zone :

  - premier bloc
  - deuxième bloc
  - . . . . . . . . . . . . . .

- deuxième zone :

  - premier bloc
  - deuxième bloc
  - . . . . . . . . . . . . .

- puis zones suivantes
- puis fenêtres suivantes

Le déroulement des calculs dans cet ordre présente l'avantage de réduire les échanges de données entre les registres ce qui simplifie l'architecture et réduit les temps de calcul.

La figure 10 représente les organes de base nécessaires au déroulement des calculs de corrélation. Le schéma ne représente qu'un processeur et qu'un registre mais la situation est la même pour les autres processeurs et les autres registres.

Un registre quelconque 40 est relié à d'autres registres avoisinants par exemple dans les quatre directions N, S, E, W par des bus bidirectionnels ou unidirectionnels selon l'architecture utilisée. Ces transferts de données entre les registres sont commandés par des moyens de commande 71 communs à tous les registres. Un processeur 72 est relié à plusieurs de ces registres par des connexions $I_1$, $I_2$, $I_3$... qui transmettent les données des registres.

Ce nombre de connexions dépend également de l'architecture utilisée. Le processeur 72 opérant les calculs par étapes successives doit stocker temporairement des résultats intermédiaires relatifs aux zones, eux-mêmes subdivisés selon les blocs. Ces résultats intermédiaires sont stockés dans des moyens de mémorisation 73.

Lorsque tous les résultats intermédiaires ont été obtenus ils sont additionnés dans des moyens de sommation 74 pour délivrer pour chaque bloc la totalité des résultats intermédiaires se rapportant à toutes les zones dudit bloc. On obtient ainsi une série de valeurs de corrélation se rapportant aux différents blocs parmi lesquels est sélectionné celui qui, ayant la meilleure corrélation, constitue le bloc dont la position constitue la nouvelle position du bloc courant dans l'image.

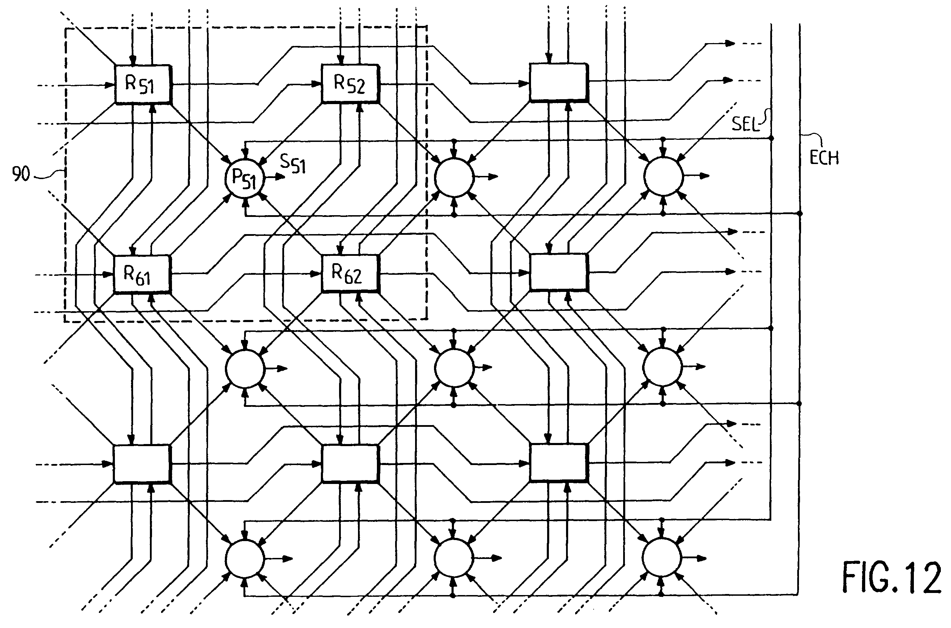

La figure 11 représente le schéma d'une partie d'un corrélateur selon l'invention qui privilégie une réduction du nombre de cellules. Dans ce cas on n'associe plus un processeur P à un seul vecteur de déplacement mais on le fait opérer pour plusieurs vecteurs de déplacement par exemple f déplacements (donc f registres). Dans ce cas il y a a.b registres R et a.b/f processeurs. Lorsque cette valeur f est égale au nombre de points par zone soit $f = c.d/n$ on peut mettre à profit certains des aménagements déjà présentés. Dans ce cas chaque registre est relié à ses registres plus proches voisins et un processeur quelconque (par exemple $P_{81}$) reçoit les données stockées dans les registres l'environnant (respectivement $R_{81}$, $R_{82}$, $R_{91}$, $R_{92}$). Avec par exemple des zones de 4 pixels (figure 11) parmi lesquels on sélectionne 1 pixel de référence, pour traiter une fenêtre de 4 x 4 pixels il faut alors 16 registres et 4 processeurs. Tous les processeurs reçoivent un signal de sélection SEL qui indique le pixel de référence sélectionné dans la zone. Cette architecture se généralise aisément au cas de zones ayant k pixels parmi lesquels on sélectionne un seul pixel de référence par zone. Chaque processeur délivre les résultats de son calcul sur une sortie propre, par exemple S81 pour le processeur P81. Plus généralement lorsque a et b sont les dimensions de la fenêtre, c et d les dimensions du bloc courant avec n pixels de référence sélectionnés par zone le corrélateur possède a.b registres, a.b/f processeurs et opère sur c.d cycles.

La figure 12 représente le schéma d'une partie répétitive d'un corrélateur selon l'invention qui privilégie le gain en vitesse dans le cas d'un découpage des blocs courants en zones. Ce schéma correspond à des zones de 4 pixels parmi lesquels un seul pixel de référence est sélectionné pour opérer la corrélation. Le traitement qui est à effectuer pour une zone particulière sera opéré par les organes situés à l'intérieur du repère discontinu 90. On y trouve quatre registres $R_{51}$, $R_{52}$, $R_{61}$, $R_{62}$ reliés tous au même processeur $P_{51}$. Chaque registre n'est plus relié directement au registre qui le précède et à celui qui le suit comme dans la figure 8 mais les connexions à la fois en lignes et en colonnes sautent un registre sur deux. Cette disposition découle du fait qu'en sélectionnant un seul pixel sur 4 pixels par zone on doit sauter (figure 3D) un pixel sur 2 dans les deux directions.

Un signal de sélection SEL permet de faire opérer le processeur sur un des quatre registres qui l'environnent dans lesquels sont stockés à un instant donné les valeurs des 4 pixels de la zone. Dans un cas plus général lorsque le bloc contient c.d pixels parmi lesquels on sélectionne n pixels de référence il faut donc c.d/n liaisons entre chaque processeur et les registres avoisinants. La valeur ECH de l'échantillon est simultanément diffusée à tous les processeurs pour calculer la corrélation. Avec une fenêtre de a.b blocs, il faut un corrélateur de a.b cellules opérant sur n cycles. Chaque processeur délivre le résultat de son calcul sur une sortie propre, par exemple S51 pour le processeur P51.

**Revendications**

1. Dispositif de corrélation opérant sur des signaux d'entrée représentant des symboles organisés en blocs selon une configuration régulière, comprenant:

   - un corrélateur (25) qui détermine une corrélation entre des symboles d'un bloc courant (22) et des symboles (12) ayant des positions identiques dans une suite de blocs à traiter issus de ladite configuration,
   - et des moyens de sélection (26) qui sélectionnent parmi les symboles dudit bloc courant un nombre limité de symboles de référence sur lesquels porte la corrélation, ce nombre étant limité à une valeur inférieure au nombre de symboles par bloc,

   caractérisé en ce que les moyens de sélection (26) sélectionnent dans ledit bloc courant, n symboles de référence avec n au moins égal à 1, la position d'un symbole étant choisie:

   - soit en fonction du contenu informationnel dudit bloc courant,
   - soit selon une sélection aléatoire,
   - soit pour une première partie prioritairement en fonction du contenu informationnel et pour une seconde partie selon une sélection aléatoire.

2. Dispositif selon la revendication 1 caractérisé en ce que la même sélection aléatoire est utilisée pour plusieurs blocs courants pour sélectionner dans chaque bloc, la position des n symboles de référence sélectionnés aléatoirement.

3. Dispositif selon la revendication 1 caractérisé en ce que ladite position adaptée au contenu informationnel est déterminée à partir d'une fonction de distorsion calculée pour chaque symbole du bloc courant vis-à-vis des symboles l'environnant, les n symboles de référence sélectionnés étant choisis parmi les symboles du bloc courant dont les valeurs de la fonction de distorsion diffèrent le plus de celles relatives aux symboles environnants.

4. Dispositif selon la revendication 3 caractérisé en ce que ladite fonction de distorsion est déterminée en calculant un laplacien se rapportant à une caractéristique propre au signal d'entrée.

5. Dispositif selon une des revendications 1 à 4 caractérisé en ce que le bloc courant est subdivisé en plusieurs zones, les moyens de sélection opérant isolément sur chaque zone, la corrélation s'opérant sur la totalité des symboles de référence sélectionnés du bloc courant.

6. Dispositif selon la revendication 5 caractérisé en ce que les symboles de référence d'une zone sont sélectionnés de sorte que la fonction de distorsion soit alternativement maximale et minimale pour des zones contiguës.

7. Dispositif selon une des revendications 1 à 6 caractérisé en ce qu'il comprend un réseau de neurones qui détermine adaptativement le nombre de symboles de référence en fonction du contenu informationnel en calculant des valeurs propres de la matrice de corrélation et les variances, ledit nombre de symholes étant égal au nombre de variances les plus élevées caractéristiques de l'ensemble des signaux d'entrée.

8. Dispositif selon une des revendications 1 à 7 caractérisé en ce que les symboles organisés selon une configuration régulière sont des pixels constituant une image, le dispositif de corrélation opérant sur des blocs de NxN pixels de référence, avec N supérieur à 1, parmi lesquels sont sélectionnés les n pixels de référence avec $n < N^2$, les corrélations étant déterminées entre un bloc courant et des blocs d'une fenêtre prise dans l'image, le bloc courant étant issu d'une image antérieure ou postérieure pour déterminer les vecteurs de déplacement des blocs d'image.

9. Dispositif selon une des revendications 1 à 7 caractérisé en ce que les symboles sont des valeurs codées binaires représentant une configuration unidimensionnelle de signaux acoustiques, le dispositif de corrélation opérant sur des blocs courants renfermant plusieurs desdites valeurs parmi lesquelles sont sélectionnées, en nombre limité et en position, des valeurs de référence.

10. Dispositif selon une des revendications 1 à 9 qui opère un calcul des vecteurs de déplacement relatifs à une suite de blocs de données à traiter contenus dans une fenêtre, caractérisé en ce que le corrélateur effectue un calcul de corrélation avec des blocs courants de données subdivisés en p zones avec n/p symboles de référence sélectionnés par zone, le corrélateur comprenant :

   - un réseau systolique de registres qui se transfèrent l'un à l'autre des données des pixels de la fenêtre,
   - une pluralité de processeurs, chaque processeur réalisant un calcul de la corrélation d'au moins un vecteur de déplacements,

   le dispositif mettant en oeuvre une première étape de calcul au cours de laquelle :

   a) chaque processeur opère un calcul de corrélation successivement sur les n/p symboles de référence sélectionnés d'une première zone, ledit calcul portant successivement sur tous les vecteurs de déplacement que doit calculer ledit processeur,
   b) des moyens de mémorisation stockent des résultats intermédiaires délivrés par les processeurs à l'issue de a),
   c) des moyens de transfert transfèrent le contenu des registres opérant sur une zone vers des registres suivants opérant sur une zone suivante,

   ladite première étape de calcul étant ensuite réitérée pour les p-1 zones suivantes, des moyens de sommation déterminant la somme des résultats intermédiaires relatifs à chaque bloc à traiter pour délivrer les corrélations de ladite suite de blocs.

11. Dispositif selon la revendication 10, caractérisé en ce que, les symboles organisés selon une configuration régulière sont des pixels constituant une image, le corrélateur opérant sur une fenêtre bidimensionnelle de pixels avec des blocs courants subdivisés en zones rectangulaires contenant k pixels avec un seul pixel de référence sélectionné par zone, avec k>1, une matrice... (suite page 28, ligne 35).

**12.** Dispositif selon la revendication 10 caractérisé en ce que le corrélateur opère sur une fenêtre bidimensionnelle de pixels avec des blocs courants (22) subdivisés en zones (22$_1$) contenant 4 pixels chacune, avec un seul pixel de référence sélectionné par zone, une matrice bidimensionnelle de registres stockant, à un instant donné, les pixels de ladite fenêtre selon le même ordonnancement, quatre registres (R$_{51}$, R$_{52}$, R$_{61}$, R$_{62}$) étant affectés au traitement (90) d'une zone, des rangées desdits registres se communiquant entre eux, dans les deux directions de la matrice, des pixels d'ordre pairs de la fenêtre et d'autres rangées de registres se communiquant entre eux des pixels d'ordre impair de la fenêtre, cette communication étant unidirectionnelle selon une direction de la fenêtre et étant bidirectionnelle selon l'autre direction de la fenêtre, un processeur (P$_{51}$) étant affecté au traitement de chaque vecteur de déplacement et opérant avec les quatre registres contenant des pixels pairs et impairs de la zone, les numéros d'ordre desdits pixels pris deux à deux étant consécutifs dans chaque direction, un signal de sélection commun (SEL) faisant opérer les processeurs avec les données des registres correspondant aux pixels de référence sélectionnés dans le bloc courant.

**13.** Méthode de traitement d'images formées de pixels organisés en blocs selon une configuration régulière, la méthode comprenant les étapes suivantes :

- déterminer (25) une corrélation entre des pixels d'un bloc courant (22) et des pixels (12) ayant des positions identiques dans une suite de blocs à traiter issus de ladite configuration,
- sélectionner (26) parmi les pixels dudit bloc courant un nombre limité de pixels de référence sur lesquels porte la corrélation, ce nombre étant limité à une valeur inférieure au nombre de pixels par bloc, la méthode étant caractérisée en ce qu'elle comprend l'étape suivante :
- sélectionner (26) dans ledit bloc courant, n pixels de référence avec n au moins égal à 1, la position d'un pixel étant choisie :

    - soit en fonction du contenu informationnel dudit bloc courant,
    - soit selon une sélection aléatoire,
    - soit pour une première partie prioritairement en fonction du contenu informationnel et pour une seconde partie selon une sélection aléatoire.

**Patentansprüche**

**1.** Korrelationsvorrichtung, die mit zwei Eingangssignalen arbeitet, die zwei in Blöcken organisierte Symbole entsprechend einer regelmäßigen Konfiguration darstellen, und beinhaltet :

- einen Korrelator (25) zur Bestimmung einer Korrelation zwischen Symbolen eines laufenden Blocks (22) und Symbolen (12) mit identischen Positionen in einer zu verarbeitenden Blockfolge, die aus der besagten Konfiguration herrührt,
- und Auswahlmittel (26), die unter den Symbolen des besagten laufenden Blocks eine begrenzte Anzahl Referenzsignale auswählen, die Korrelation einbeziehend, wobei diese Anzahl auf einen unter der Anzahl Symbole pro Block liegenden Wert begrenzt ist,

dadurch gekennzeichnet, daß die Auswahlmittel (26) in dem besagten laufenden Block n Referenzsymbole auswählen, wobei n mindestens gleich 1, und die Position eines Symbols gewählt wird :

- entweder unter Berücksichtigung des informationellen Inhalts des besagten laufenden Blocks,
- oder nach einer Zufallswahl,
- oder für einen ersten Teil prioritär unter Berücksichtigung des informationellen Inhalts und für einen zweiten Teil nach einer Zufallswahl.

**2.** Vorrichtung nach Anspruch 1, dadurch gekennzeichnet, daß dieselbe Zufallswahl für mehrere laufende Blöcke gewählt wird, um in jedem Block die Position der n zufällig ausgewählten Referenzsymbole auszuwählen.

**3.** Vorrichtung nach Anspruch 1, dadurch gekennzeichnet, daß die besagte, dem informationellen Inhalt angepaßte Position ausgehend von einer Distorsionsfunktion bestimmt wird, für jedes Symbol des laufenden Blocks hinsichtlich der umgebenden Symbole berechnet, während die n ausgewählten Referenzsymbole unter den Symbolen des laufenden Blocks gewählt werden, von denen die Werte der Distorsionsfunktion in bezug auf die umgebenden Symbole am meisten abweichen.

4. Vorrichtung nach Anspruch 3, dadurch gekennzeichnet, daß die besagte Distorsionsfunktion unter Berechnung eines Lapicien-Operators bestimmt wird, der sich auf eine dem Eingangssignal eigene Charakteristik bezieht.

5. Vorrichtung nach einem der Ansprüche 1 bis 4, dadurch gekennzeichnet, daß der laufende Block in mehrere Zonen unterteilt wird, während die Auswahlmittel einzeln in jeder Zone arbeiten und die Korrelation über die Gesamtheit der ausgewählten Referenzsymbole des laufenden Blocks vorgenommen wird.

6. orrichtung nach Anspruch 5, dadurch gekennzeichnet, daß die Referenzsymbole einer Zone derart ausgewählt werden, daß die Distorsionsfunktion bei aneinandergrenzenden Zonen entweder maximal oder minimal ist.

7. Vorrichtung nach einem der Ansprüche 1 bis 6, dadurch gekennzeichnet, daß sie ein Neuronennetz enthält, das die Anzahl Referenzsymbole adaptiv unter Berücksichtigung des informationellen Inhalts unter Berechnung der der Korrelationsmatrix eigenen Werte und der Varianzen bestimmt, wobei die Anzahl Symbole gleich der Anzahl der höchsten, für die Gesamtheit der Eingangssignale charakteristischen Varianzen ist.

8. Vorrichtung nach einem der Ansprüche 1 bis 7, dadurch gekennzeichnet, daß die nach einer regelmäßigen Konfiguration organisierten Symbole ein Bild bildende Pixel sind, während die Korrelationsvorrichtung in Blöcken zu NxN Referenzpixeln arbeitet, mit N größer 1, unter denen die n Referenzpixel mit $n < n^2$ ausgewählt werden, die Korrelationen zwischen einem laufenden Block und Blöcken eines im Fenster genommenen Bildes bestimmt werden, der laufende Block aus einem vorhergehenden oder nachfolgenden Bild herrührt, um die Versetzungsvektoren der Bildblöcke zu bestimmen.

9. Vorrichtung nach einem der Ansprüche 1 bis 7, dadurch gekennzeichnet, daß die Symbole binär codierte Werte sind, die eine Konfiguration eindimensionaler Akustiksignale darstellen, die Korrelationsvorrichtung arbeitet dann mit den mehrere dieser Werte beinhaltenden laufenden Blöcken, unter denen in begrenzter Anzahl und Position Referenzwerte ausgewählt werden.

10. Vorrichtung nach einem der Ansprüche 1 bis 9, die eine Berechnung der Versetzungsvektoren in bezug auf eine in einem Fenster enthaltene Datenblockfolge durchführt, dadurch gekennzeichnet, daß der Korrelator eine Korrelationsberechnung mit laufenden Datenblöcken vornimmt, unterteilt in p Zonen mit n/p pro Zone ausgewählten Referenzsymbolen, wobei der Korrelator enthält :

- ein systolisches Registernetz zum internen Austausch der Pixeldaten des Fensters,
- eine Vielzahl an Prozessoren, wobei jeder Prozessor eine Korrelationsberechnung mindestens eines Versetzungsvektors durchführt,

die Vorrichtung einen ersten Berechnungsschritt vornimmt, in dessen Verlauf :

a) jeder Prozessor aufeinanderfolgend eine Korrelationsberechnung der n/p ausgewählten Referenzsymbole einer ersten Zone vornimmt und die besagte Berechnung aufeinanderfolgend alle Versetzungsvektoren einbezieht, die der besagte Prozessor zu berechnen hat,
b) Speichermittel die von den Prozessoren am Ende von a) ausgegebenen Zwischenergebnisse speichern,
c) Übertragungsmittel den Inhalt der in einer Zone arbeitenden Register zu den folgenden, in einer folgenden Zone arbeitenden Register übertragen, der erste Berechnungsschritt dann für die p-1 folgenden Zonen wiederholt wird, wobei Summiermittel die Summe der Zwischenergebnisse in bezug auf jeden zu verarbeitenden Block bestimmen, um die Korrelation der besagten Blockfolge zu liefern.

11. Vorrichtung nach Anspruch 10, dadurch gekennzeichnet, daß die nach einer regelmäßigen Konfiguration organisierten Symbole ein Bild bildende Pixel sind, während der Korrelator in einem zweidimensionalen Pixelfenster mit den laufenden Blöcken arbeitet, unterteilt in rechteckige Zonen mit k Pixeln und einem einzigen pro Zone ausgewählten Referenzpixel, mit k > 1, eine wobei eine zweidimensionale Registermatrix zu einem bestimmten Zeitpunkt die Pixel des besagten Fensters nach derselben Anordnung speichert, k Register der Verarbeitung einer Zone zugeteilt sind, die Fensterpixel in beide Richtungen der Matrix zwischen den Reihen der besagten Register übertragen werden, ein Prozessor der aufeinanderfolgenden Verarbeitung von k Versetzungsvektoren zugeteilt ist und mit k Registern arbeitet, die zur selben Zone gehörende Pixel enthalten, die Ordnungsnummern der besagten paarweise genommenen Pixel in beide Richtungen aufeinanderfolgen, und ein Auswahlsignal jeden Prozessor für jede Versetzung mit den in der laufenden Zone ausgewählten Referenzpixeln entsprechenden Registerdaten arbeiten läßt.

12. Vorrichtung nach Anspruch 10, dadurch gekennzeichnet, daß der Korrelator der Korrelator in einem zweidimensionalen Pixelfenster mit laufenden Blöcken (22) arbeitet, die in Zonen (22$_i$) mit jeweils 4 Pixeln unterteilt sind, mit einem einzigen ausgewählten Referenzpixel pro Zone, wobei eine zweidimensionale Registermatrix zu einem bestimmten Zeitpunkt die Pixel des besagten Fensters nach derselben Anordnung speichert, vier Register ($R_{51}$, $R_{52}$, $R_{61}$, $R_{62}$) der Verarbeitung (90) einer Zone zugeteilt sind, die Pixel gerader Ordnung des Fensters von den besagten Registerreihen untereinander in beide Richtungen der Matrix übertragen werden und die Pixel ungerader Ordnung von anderen Registerreihen übertragen werden, diese Verbindung nach einer Richtung des Fensters in eine Richtung und nach der anderen Richtung des Fensters in zwei Richtungen verläuft, ein Prozessor ($P_{51}$) der Verarbeitung jedes Versetzungsvektors zugeteilt ist und mit vier Registern arbeitet, die gerade und ungerade Fensterpixel enthalten, die Ordnungsnummern der besagten paarweise genommenen Pixel in jede Richtung aufeinanderfolgen, und ein gemeinsames Auswahlsignal (SEL) die Prozessoren mit den im laufenden Block ausgewählten Referenzpixeln entsprechenden Registerdaten arbeiten läßt.

13. Verarbeitungsmethode von aus Pixeln gebildeten Bildern, nach einer regelmässigen Konfiguration in Blöcken organisiert, wobei die Methode folgende Schritte umfasst :

- Bestimmung (25) einer Korrelation zwischen den Pixeln eines laufenden Blocks (22) und den Pixeln (12) mit identischen Positionen in einer aus der besagten Kongifuration kommenden, zu verarbeitenden Blockfolge,
- Auswahl (26) unter den Pixeln des besagten laufenden Blocks einer begrenzten Anzahl von der Korrelation einbezogener Referenzpixel, wobei diese Anzahl auf einen unter der Anzahl Pixel pro Block liegenden Wert begrenzt und die Methode dadurch gekennzeichnet ist, dass sie folgenden Schritt enthält :
- Auswahl (26) im besagten Laufenden Block von n Referenzpixeln mit n mindestens gleich 1 wobei die Position eines Pixels gewählt wird :
- entweder unter Berücksichtigung des informativen Inhalts des besagten laufenden Blocks,
- oder nach einer Zufallsauswahl,
- oder für einen ersten Teil vorrangig unter Berücksichtigung des informativen Inhalts und für einen zweiten Teil nach einer Zufallsauswahl.

## Claims

1. A correlation device acting on input signals which represent symbols organized in blocks in accordance with a regular configuration, comprising :

- a correlator (25) determining a correlation between the symbols of a current block (22) and symbols (12) having identical positions in a sequence of blocks to be processed, coming from said configuration,
- and selection means (26) selecting, from the symbols of said current block, a limited number of reference symbols to which the correlation relates, this number being limited to a value which is smaller than the number of symbols per block, characterized in that the selection means (26) select, in said current block, n reference symbols with n being at least equal to 1, the position of a symbol being chosen:
- either as a function of the data content of said current block,
- or in accordance with a random selection,
- or for a first portion preferably as a function of the data content and for a second portion according to a random selection.

2. A device as claimed in Claim 1, characterized in that the same random selection is used for a plurality of current blocks for selecting the position of the n randomly selected reference symbols in each block.

3. A device as claimed in Claim 1, characterized in that said position adapted to the data content is determined from a distortion function calculated for each symbol of the current block with respect to the surrounding symbols, the n selected reference symbols being chosen from the symbols of the current block whose values of the distortion function differ most from those related to the surrounding symbols.

4. A device as claimed in Claim 3, characterized in that said distortion function is determined by calculating a laplacian relating to a characteristic suited to the input signal.

5. A device as claimed in any one of Claims 1 to 4, characterized in that the current block is subdivided into several zones, the selection means acting separately on each zone, the correlation acting on the totality of the selected reference symbols of the current block.

6. A device as claimed in Claim 5, characterized in that the reference symbols of a zone are selected in such a way that the distortion function is alternately maximal and minimal for contiguous zones.

7. A device as claimed in any one of Claims 1 to 6, characterized in that it includes a neural network which adaptively determines the number of reference symbols as a function of the data content by calculating suitable values of the correlation matrix and the variances, said number of symbols being equal to the number of highest variances which are characteristic of the set of input signals.

8. A device as claimed in any one of Claims 1 to 7, characterized in that the symbols organized in a regular configuration are pixels constituting an image, the correlation device acting on blocks of NxN reference pixels, with N being larger than 1, from which the n reference pixels are selected with $n < N^2$, the correlations being determined between a current block and blocks of a window taken in the image, the current block being obtained from a preceding or a subsequent image to determine the displacement vectors of the image blocks.

9. A device as claimed in any one of Claims 1 to 7, characterized in that the symbols are binary encoded values representing a unidimensional acoustic signal configuration, the correlation device acting on current blocks enclosing several of said values from which reference values are selected in a limited number and in position.

10. A device as claimed in any one of Claims 1 to 9 which effect a displacement vector calculation related to a sequence of data blocks to be processed contained in a window, characterized in that the correlator effects a correlation calculation using current data blocks subdivided into p zones with n/p selected reference symbols per zone, the correlator comprising :

   - a systolic network of registers in which pixel data of the window are transferred from one register to the other,
   - a plurality of processors, each processor effecting a calculation of the correlation of at least one displacement vector,

   the device making operative a first calculating stage during which :

   a) each processor performs a correlation calculation successively on the n/p selected reference symbols of a first zone, said calculation successively bearing on all the displacement vectors which said processor is to calculate,
   b) storage means store the intermediate results supplied by the processors at the end of a),
   c) transfer means transfer the content of the registers acting on a zone to subsequent registers acting on a next zone,

   said first calculation step being thereafter reiterated for the subsequent p-1 zones,
   summing means determining the sum of the intermediate results related to each block to be processed to supply the correlations of said sequence of blocks.

11. A device as claimed in Claim 10, characterized in that the symbols organized in a regular configuration are pixels constituting an image, the correlator acting on a bidimensional pixel window having current blocks subdivided into rectangular zones containing k pixels, with a single reference pixel being selected per zone, where k>1, a bidimensional matrix of registers storing, at a given instant, the pixels of said window in accordance with the same lay-out, k registers being assigned to the processing of a zone, rows of said registers exchanging pixels of the window in the two directions of the matrix, a processor being assigned to the consecutive processing of k displacement vectors while operating with k registers containing pixels belonging to the same zone, the serial numbers of said pixels being consecutive in the two directions, a selection signal causing each processor to operate, for each displacement, with the register data corresponding to the selected reference pixel of the current zone.

12. A device as claimed in Claim 10, characterized in that the correlator acts on a bidimensional pixel window having current blocks (22) subdivided into zones ($22_1$) containing 4 pixels each, with a single reference pixel being selected per zone, a bidimensional matrix of registers storing, at a given instant, the pixels of said window in accordance with the same lay-out, four registers ($R_{51}$, $R_{52}$, $R_{61}$, $R_{62}$) being assigned to the processing (90) of a zone, rows of said registers exchanging even pixels of the window in both directions of the matrix and further register rows exchanging odd pixels of the window, this exchange being unidirectional in one direction of the window and bidirectional in the other direction of the window, a processor ($P_{51}$) being assigned to the processing of each displacement vector and operating with the four registers containing even and odd pixels of the zone, the serial numbers of said pixels taken two by two being consecutive in each direction, a common selection signal (SEL) causing the processors to operate with the data of the registers corresponding to the selected reference pixels in the current block.

13. A method of processing images formed from pixels organized in blocks in accordance with a regular configuration, the method comprising the following steps :

- determining (25) a correlation between the pixels of a current block (22) and pixels (12) having identical positions in a sequence of blocks to be processed, coming from said configuration,
- selecting (26), from the pixels of said current block, a limited number of reference pixels to which the correlation relates, this number being limited to a value which is smaller than the number of pixels per block, the method being characterized in that it comprises the following step :
- selecting (26), in said current block, n reference pixels with n being at least equal to 1, the position of a pixel being chosen:
- either as a function of the data content of said current block,
- or in accordance with a random selection,
- or for a first portion preferably as a function of the data content and for a second portion according to a random selection.

FIG.1

FIG.2

FIG.4

FIG.3

FIG.5

EP 0 492 702 B1

FIG.6

FIG.7

19

FIG.8

FIG.11

FIG.9

FIG.10

FIG.12